# EUROPEAN PATENT APPLICATION

(11) **EP 4 813 216 A1**
(43) Date of publication of application: **30.09.2026**
(21) Application number: 24893848.2
(22) Date of filing: 19.09.2024
(51) Int. Cl.: A23L 7/109

(54) **NOODLES AND METHOD FOR PRODUCING SAME**

(30) Priority: 20.11.2023 JP 2023196618
(71) Applicant: Acecook Co., Ltd., Suita-shi, Osaka 564-0063 (JP)
(72) Inventor: KOYAMA Shingo, Kato-shi, Hyogo 679-0221 (JP); UENO Noriyoshi, Kato-shi, Hyogo 679-0221 (JP); KINOSHITA Seisuke, Kato-shi, Hyogo 679-0221 (JP); HIGASHIDA Jun, Kato-shi, Hyogo 679-0221 (JP); FUJIKAWA Mana, Kato-shi, Hyogo 679-0221 (JP); HIROSE Tomoyuki, Kato-shi, Hyogo 679-0221 (JP)
(74) Representative: Algemeen Octrooi- en Merkenbureau B.V.
(86) International application number: PCT/JP2024/033384
(87) International publication number: WO 2025/109853

(57) **Abstract**

An object of the present disclosure is to provide noodles in which a dough containing an alginic acid ester does not require acid solution treatment, the noodles being satisfactory in the ease of loosening when eaten and exhibiting a good texture with elasticity and firmness, and a method for producing the noodles.

A method for producing noodles, comprising an ingredient mixing step, a noodle production step, a gelatinization step, and a drying step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a pH of a suspension of noodles obtained in the drying step is more than 6.5 and 9 or less, and
wherein an acid solution treatment step is not performed or an acid solution treatment step is performed after the gelatinization step.

## Description

### Technical Field

The present disclosure relates to noodles and a method for producing the noodles.

### Background Art

Noodles are one of the favored foods not only in Japan but also all over the world. Representative types of noodles include, for example, noodles made from wheat flour, such as *ramen* (Chinese noodles), pasta, *udon* (Japanese wheat noodles), *yakisoba* (fried noodles), *somen* (Japanese thin wheat noodles), *hiyamugi* (thin *udon)*, and the like. Other types of noodles include grain noodles made mainly from grain flours other than wheat flour, such as buckwheat flour and rice flour, for example, *soba* (buckwheat noodles) and *bifun* (rice vermicelli); and additionally, starch noodles made mainly from starches, for example, glass noodles (*harusame*) and *kudzukiri* (*kudzu* starch noodles). Noodles are thus rich in variety and rank as an important food in the diet.

In recent years, since wheat allergies have become an issue and the idea of gluten-free has gained attention, demand has increased for grain noodles made from grain flours other than wheat flour as ingredients, starch noodles made from starches as ingredients, and the like.

In general, gluten is responsible for binding the dough, and prevents the dough and noodle strips from breaking apart to maintain good production suitability. Gluten also contributes to the noodle quality, and is effective in, for example, imparting elasticity and firmness to the noodles, and preventing melting of the noodles during boiling.

On the other hand, production of noodles containing no gluten (gluten-free noodles) requires addition of a binding ingredient (thickening agent) other than gluten to ensure production suitability. Furthermore, most of grain flours other than wheat flour do not contain gluten, and thus tend to form noodles having a crumbly texture with a disintegrating feel, or a weak texture. When trying to produce noodles with an elastic and firm texture like wheat noodles without using wheat flour, it is required to add a noodle quality improver (texture improver) to the ingredients.

Glass noodles, which are one of starch noodles, are commonly produced by, for example, the following steps: a noodle production step in which a starch slurry used as an ingredient, which is obtained by adding water to a starch and kneading the mixture, is put in a cylindrical container (*tonpyo*) with holes in the bottom, and the dough is allowed to drop down through the container bottom to linearly drop into boiling water to be gelatinized; a step in which the resulting noodle strips are cooled with water; a step in which the cooled noodle strips are hung on a straight bar; a freezing step in which the noodle strips hung on the straight bar are frozen and aged; a thawing step in which the frozen glass noodles are thawed; and a drying step in which the thawed glass noodles are dried.

Of these steps, the freezing step and the thawing step greatly contribute to the texture and ease of loosening of glass noodles. However, the freezing step requires storing glass noodles in a freezer for a certain period of time, and thus has the disadvantage of a long production time and high total running costs.

Thus, methods for easily producing glass noodles have been proposed (for example, Patent Literatures 1 and 2).

For example, Patent Literature 1 discloses that glass noodles can be produced from a mixture containing a starch, a cellulose ether, and water, without performing freezing and thawing steps, to give a texture similar to that of conventional glass noodles.

However, the present inventors experimentally produced glass noodles by incorporating a cellulose ether into a dough for glass noodles according to the method disclosed in Patent Literature 1, and evaluated the glass noodles. As a result, the resulting glass noodles did not easily loosen when eaten (after reconstitution with hot water), and did not have a texture similar to that of so-called glass noodles.

Patent Literature 2 discloses noodles produced through gelatinization treatment and acid solution treatment of noodle strips, wherein the noodles are obtained from a noodle-making ingredient containing an ingredient flour and an alginic acid, and wherein the ingredient flour contains, as a main ingredient, a grain flour substantially free from gluten and/or a starch. Furthermore, Patent Literature 2 discloses that noodles in which the noodle strips are less likely to melt during boiling treatment and that have a good taste and texture can be produced from the noodle-making ingredient that contains an ingredient flour containing, as a main ingredient, a grain flour other than wheat flour and/or a starch.

Claim 4 and the like of Patent Literature 2 disclose that the alginic acid is selected from the group consisting of alginic acid, alginic acid salts, alginic acid esters, and mixtures thereof. However, alginic acid only was actually used in the examples, and Patent Literature 2 fails to demonstrate that alginic acid esters have a similar effect. Furthermore, the method disclosed in Patent Literature 2 essentially requires an acid solution treatment step after gelatinization of the noodle strips, in order to impart a texture; however, there is a concern that sourness may be imparted to the noodles to deteriorate the taste.

Thus, the present inventors produced starch noodles according to the method disclosed in Patent Literature 2. As a result, the dough was very hard because the percentage of added water was as low as 50 to 60%, and therefore, the dough could not be extruded through a common extruder, and needed to be extruded using a device through which the dough can be extruded at high pressure (high-pressure extruder), like a pasta machine. Moreover, although the noodles obtained with the high-pressure extruder had a good texture with excellent elasticity and firmness, the noodles produced in the same manner without adding an alginic acid also had a good texture, and there was no significant difference between the textures of the noodles with or without the alginic acid.

However, when noodles were produced by increasing the percentage of added water to make the dough softer, a good texture was not obtained. This suggested that, according to the method disclosed in Patent Literature 2, noodles in which the percentage of added water is more than 60% cannot give a sufficient texture (elasticity and firmness).

### Citation List

### Patent Literature

[Patent Literature 1] JP-A-2014-103967
[Patent Literature 2] JP-A-2000-245375

### Summary of Invention

### Technical Problem

It is an object of the present disclosure to provide noodles in which a dough containing an alginic acid ester does not require acid solution treatment, the noodles being satisfactory in the ease of loosening when eaten and exhibiting a good texture with elasticity and firmness, and a method for producing the noodles.

### Solution to Problem

The present inventors have conducted extensive research to develop noodles in which a dough containing an alginic acid ester does not require acid solution treatment, the noodles being satisfactory in the ease of loosening when eaten and exhibiting a good texture with elasticity and firmness, and consequently found that noodles that are satisfactory in the ease of loosening when eaten and exhibit a good texture with elasticity and firmness can be obtained by using an ingredient that comprises an ingredient flour containing a starch and/or a grain flour substantially free from gluten, an alginic acid ester, and an alkaline agent, and setting a pH of a 10% suspension of the resulting noodles to more than 6.5 and 9 or less. The present disclosure has been completed based on these findings.

In summary, the present disclosure is as itemized below:
Item 1. A method for producing noodles, comprising an ingredient mixing step, a noodle production step, a gelatinization step, and a drying step,
   wherein the ingredient in the ingredient mixing step comprises an ingredient flour containing a starch and/or a grain flour substantially free from gluten, an alkaline agent, and an alginic acid ester, and
   wherein a pH of a suspension of noodles obtained in the drying step is more than 6.5 and 9 or less.
Item 2. The method for producing noodles according to item 1, wherein the noodle dough obtained in the ingredient mixing step has a pH of 6 to 9.5.
Item 3. The method for producing noodles according to item 1 or 2, wherein the ingredient mixing step is the step of producing a noodle dough by mixing the ingredient and water, and
   wherein a percentage of added water in the noodle dough is 60% by mass or more.
Item 4. The method for producing noodles according to any one of items 1 to 3, wherein the acid solution treatment step is not required after the gelatinization step.
Item 5. The method for producing noodles according to any one of items 1 to 4, wherein the method does not include an aging step.
Item 6. Noodles obtained by the method for producing noodles according to any one of items 1 to 5.
Item 7. A method for producing gelatinized noodles, comprising an ingredient mixing step, a noodle production step, and a gelatinization step,
   wherein the ingredient in the ingredient mixing step comprises an ingredient flour containing a starch and/or a grain flour substantially free from gluten, an alkaline agent, and an alginic acid ester, and
   wherein a pH of a suspension of gelatinized noodles obtained in the gelatinization step is more than 6.5 and 9 or less.
Item 8. Gelatinized noodles obtained by the method for producing gelatinized noodles according to item 7.

### Item 1-1.

A method for producing noodles, comprising an ingredient mixing step, a noodle production step, a gelatinization step, and a drying step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a pH of a suspension of noodles obtained in the drying step is more than 6.5 and 9 or less, and
wherein an acid solution treatment step is not performed or an acid solution treatment step is performed after the gelatinization step.

### Item 2-1.

The method for producing noodles according to item 1-1, wherein the noodle dough obtained in the ingredient mixing step has a pH of 6 to 9.5.

### Item 3-1.

The method for producing noodles according to item 1-1, wherein the ingredient mixing step is the step of producing a noodle dough by mixing the ingredient and water, and
wherein a percentage of added water in the noodle dough is 60% by mass or more.

### Item 4-1.

The method for producing noodles according to item 1-1, wherein the acid solution treatment step is not performed after the gelatinization step.

### Item 5-1.

The method for producing noodles according to item 1-1, wherein the method does not include an aging step.

### Item 6-1.

Noodles obtained by the method for producing noodles according to any one of items 1-1 to 5-1.

### Item 7-1.

A method for producing gelatinized noodles, comprising an ingredient mixing step, a noodle production step, and a gelatinization step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a pH of a suspension of gelatinized noodles obtained in the gelatinization step is more than 6.5 and 9 or less, and an acid solution treatment step is not performed or an acid solution treatment step is performed after the gelatinization step.

### Item 8-1.

Gelatinized noodles obtained by the method for producing gelatinized noodles according to item 7-1.

### Item 1-2.

A method for producing noodles, comprising an ingredient mixing step, a noodle production step, a gelatinization step, and a drying step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a percentage of added water in the noodle dough is 70% by mass or more,
wherein a pH of a suspension of noodles obtained in the drying step is more than 6.5 and 9 or less, and
wherein an acid solution treatment step is not performed or an acid solution treatment step is performed after the gelatinization step.

### Item 2-2.

The method for producing noodles according to item 1-2, wherein the noodle dough obtained in the ingredient mixing step has a pH of 6 to 9.5.

### Item 3-2.

The method for producing noodles according to item 1-2, wherein the acid solution treatment step is not performed after the gelatinization step.

### Item 4-2.

The method for producing noodles according to item 1-2, wherein the method does not include an aging step.

### Item 5-2.

Noodles obtained by the method for producing noodles according to any one of items 1-2 to 4-2.

### Item 6-2.

A method for producing gelatinized noodles, comprising an ingredient mixing step, a noodle production step, and a gelatinization step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a percentage of added water in the noodle dough is 70% by mass or more,
wherein a pH of a suspension of gelatinized noodles obtained in the gelatinization step is more than 6.5 and 9 or less, and
wherein an acid solution treatment step is not performed or an acid solution treatment step is performed after the gelatinization step.

### Item 7-2.

Gelatinized noodles obtained by the method for producing gelatinized noodles according to item 6-2.

### Item 1-3.

Noodles obtained by a method for producing noodles, comprising an ingredient mixing step, a noodle production step, a gelatinization step, and a drying step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a percentage of added water in the noodle dough is 70% by mass or more,
wherein a pH of a suspension of noodles obtained in the drying step is more than 6.5 and 9 or less, and
wherein an acid solution treatment step is not performed or an acid solution treatment step is performed after the gelatinization step.

### Item 2-3.

Gelatinized noodles obtained by a method for producing gelatinized noodles, comprising an ingredient mixing step, a noodle production step, and a gelatinization step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a percentage of added water in the noodle dough is 70% by mass or more,
wherein a pH of a suspension of gelatinized noodles obtained in the gelatinization step is more than 6.5 and 9 or less, and
wherein an acid solution treatment step is not performed or an acid solution treatment step is performed after the gelatinization step.

At present, it is impossible or impractically difficult to completely specify the structure of, or the whole range of components contained in, the noodles as defined by the production steps among the aspects of the present disclosure, and therefore, the noodles are specified in a product-by-process claim.

### Advantageous Effects of Invention

According to the present disclosure, it is possible to provide noodles in which a dough containing an alginic acid ester does not require acid solution treatment, the noodles being satisfactory in the ease of loosening when eaten and exhibiting a good texture with elasticity and firmness, and a method for producing the noodles.

Furthermore, an accompanying effect is that when the noodles are starch noodles, it is possible to produce noodles that are satisfactory in the ease of loosening when eaten and exhibit a good texture with elasticity and firmness, without performing an aging step (a chilling step, a freezing and thawing step, or the like), which is an essential step in conventional methods for producing starch noodles.

### Brief Description of the Drawings

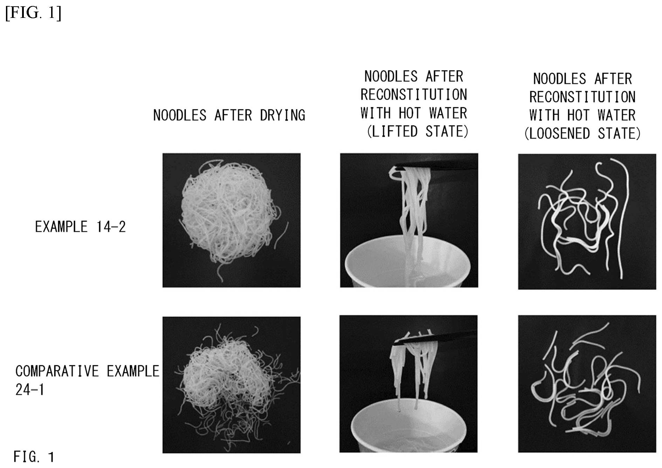

FIG. 1 shows photographs each taken of the state of noodle strips of Example 14-2 or Comparative Example 24-1.

### Description of Embodiments

This patent application claims priority and benefit under the Paris Convention based on Japanese Patent Application No. 2023-196618 (filed on November 20, 2023), the disclosure of which is incorporated herein by reference in its entirety.

### Method for Producing Noodles

The method for producing noodles of the present disclosure will be hereinafter described in detail.

The method for producing noodles of the present disclosure comprises an ingredient mixing step, a noodle production step, a gelatinization step, and a drying step, wherein the ingredient in the ingredient mixing step comprises an ingredient flour containing a starch and/or a grain flour substantially free from gluten, an alkaline agent, and an alginic acid ester, and wherein a pH of a 10% suspension of noodles obtained in the drying step is more than 6.5 and 9 or less.

According to the method for producing noodles of the present disclosure, when the noodles to be produced are starch noodles, it is possible to obtain noodles that are satisfactory in the ease of loosening when eaten and exhibit a good texture with elasticity and firmness, without performing an acid solution treatment step, which is required when alginic acid is used as an ingredient, and an aging step (a chilling step, a freezing and thawing step, or the like), which is an essential step in conventional methods for producing starch noodles. However, the method may comprise an acid solution treatment step, an aging step, and the like, as required.

When the noodles to be produced are grain noodles, an acid solution treatment step may be performed in order to improve the storage stability.

### Each of the steps in the method will be hereinafter described in detail. Ingredient Mixing Step

The ingredient mixing step (sometimes also referred to as a kneading step) is the step of mixing (kneading) an ingredient comprising a starch and/or a grain flour substantially free from gluten with water (sometimes also referred to as "water for kneading", hereinafter) to produce a noodle dough.

### Ingredient

The ingredient (which may also be referred to as the raw material) of the noodles of the present disclosure comprises a starch and/or a grain flour substantially free from gluten, an alginic acid ester, and an alkaline agent.

The ingredient of the noodles comprises an ingredient flour as a main ingredient, which contains a starch and/or a grain flour substantially free from gluten.

### Starch

Starch is composed of polymer compounds, i.e., amylose and amylopectin in which glucose molecules are bound. Amylose has a simple structure in which glucose molecules are bound in the form of a long chain (or in a helical form). Amylopectin has a complex structure in which chain bonds of glucose molecules form a network-like structure, which is further branched.

The number of bound glucose molecules ranges from several tens to several hundreds for amylose and from several hundreds to several hundreds of thousands for amylopectin. The amylose and amylopectin contents differ depending on the type of starch, and this is reflected in the differences in the properties of each type of starch, such as the degree of viscosity of the starch in the gelatinized state.

Examples of the starch include, but are not specifically limited to, raw starches (unmodified starches), such as mung bean starch, corn starch, rice starch, broad bean starch, adzuki bean starch, sweet potato starch, pea starch, wheat starch, potato starch, tapioca (cassava) starch, and *kudzu* (arrowroot) flour.

The above-mentioned starches can be classified according to the type of plant used as the ingredient. For example, the starches are classified into starches from plants taken above the ground (aboveground starches) and starches from plants taken under the ground (underground starches).

Examples of the aboveground starches include grain starches (such as from rice, wheat, and corn), stem starches, and bean starches (such as from mung bean, broad bean, adzuki bean, and pea).

Examples of the underground starches include rhizome starches (such as from potato) and tuber starches (such as from sweet potato, tapioca, and *kudzu*).

The above-mentioned starches include not only the above-mentioned raw starches (unmodified starches) but also bleached starches and modified starches.

The bleached starches are starches treated by adding hypochlorites to starch suspensions adjusted to be alkaline, and have an improved color tone.

The modified starches are starches obtained by subjecting starches to chemical or physical modification treatment. Examples of the modification treatment include acid treatment, esterification treatment, etherification treatment, crosslinking treatment, and oil/fat modification treatment.

These starches may be used alone or in appropriate combinations of two or more.

In the present disclosure, any starch and/or any grain flour substantially free from gluten can be used as the ingredient without specific limitation. In particular, one of the features of the present disclosure may be that noodles can be produced using an inexpensive starch such as tapioca starch or potato starch.

Tapioca starch and potato starch will be hereinafter described.

Tapioca starch is composed of 16 to 17% of the linear molecule amylose and 83 to 84% of the branched molecule amylopectin.

Potato starch is composed of 20 to 23% of the linear molecule amylose and 77 to 80% of the branched molecule amylopectin.

Tapioca starch and potato starch, for example, which contain high proportions of amylopectin, are characterized by high viscosity or water retention and resistance to aging. When using a starch containing a high proportion of amylopectin, noodles that are smooth and pleasant when swallowed and have a soft texture can be obtained. Thus, the tapioca starch and potato starch, for example, are often used as texture improvers for noodles. However, addition of these starches in high proportions tends to make the texture too soft, and make the surface of the noodle strips sticky, so that the noodle strips easily adhere to each other to deteriorate the ease of loosening.

Thus, tapioca starch and potato starch, for example, may be ingredients not suitable for producing noodles that are elastic and firm, and are satisfactory in the ease of loosening.

According to the present disclosure, noodles that are satisfactory in the ease of loosening when eaten and exhibit a good texture with elasticity and firmness are obtained using an ingredient (such as tapioca starch or potato starch) that is inexpensive and convenient to use in terms of cost, but that is difficult to produce noodles that are elastic and firm.

### Grain Flour Substantially Free From Gluten

As used herein, the grain flour substantially free from gluten refers to a grain flour other than wheat flour. Examples of the grain flour substantially free from gluten include, but are not limited to, buckwheat flour, corn flour, rice flour, and soybean flour.

These grain flours substantially free from gluten may be used alone or in appropriate combinations of two or more.

The ingredient flour may contain only a starch, may contain only a grain flour substantially free from gluten, or may contain both a starch and a grain flour substantially free from gluten.

Examples of commercially available dried noodles made from starches such as mung bean, potato, sweet potato, and tapioca starches as ingredients include glass noodles and *kudzukiri* (*kudzu* starch noodles).

Examples of noodles containing only a grain flour substantially free from gluten as the ingredient flour include rice noodles such as *pho* and *bun*.

When the ingredient flour contains a starch and a grain flour substantially free from gluten, the mass ratio between the starch and the grain flour substantially free from gluten is not specifically limited. The starch and the grain flour substantially free from gluten can be mixed at a mass ratio of usually 1:0.01 to 100, preferably 1:0.05 to 50, and more preferably 1:0.04 to 40. As used herein, noodles containing 50% by mass or more of a starch in the ingredient flour can be defined as starch noodles.

Noodles obtained from a starch are commonly called starch noodles. Unlike common noodles obtained from wheat flour, starch noodles contain less protein. For example, the protein content per 100 g of *ramen* is 7.4 g, whereas the protein content per 100 g of dried glass noodles is 0.2 g. Starch noodles can be used as low-protein noodles. Low-protein noodles can be used for a kidney disease diet, for example. Kidney disease is a condition in which kidney function is impaired, requiring restrictions primarily on protein and salt. Therefore, the noodles of the present disclosure can be used as a meal for reducing the burden on the kidney. Dietary therapy using low-protein noodles and the like can be effective in suppressing the deterioration of kidney disease.

Furthermore, starch noodles are a gluten-free food. The term "gluten-free" means that gluten is not used. Specifically, "gluten-free" means not only that wheat gluten derived from wheat flour is not used, but also that gluten proteins derived from other grains are not contained. According to the standard defined by the U.S. Food and Drug Administration (FDA), a gluten-free food should satisfy either the following requirement (1) or (2):
(1) A food not containing any of the following ingredients:
   an ingredient that is a gluten-containing grain (such as spelt wheat);
   an ingredient derived from a gluten-containing grain that has not been processed to remove gluten (such as wheat flour); and
   an ingredient derived from a gluten-containing grain that has been processed to remove gluten (such as wheat starch), but gives 20 milligrams or more of gluten per kilogram in the food
(2) A food essentially free from gluten

As shown by these definitions, the term "gluten-free" does not refer only to foods not containing any gluten at all.

### Alkaline Agent

The ingredient of the noodles contains an alkaline agent in addition to the above-mentioned main ingredient (ingredient flour).

Usually, known alkaline agents for foods that can be commonly used can be used as the alkaline agent without specific limitation. Examples of such alkaline agents include phosphoric acid salts and carbonic acid salts. Examples of phosphoric acid salts include trisodium phosphate, tripotassium phosphate, and sodium tripolyphosphate. Examples of carbonic acid salts include sodium carbonate, potassium carbonate, sodium hydrogen carbonate, and ammonium carbonate.

The amount of the alkaline agent added is adjusted according to the type and amount of the ingredient flour, the type of the alkaline agent, and the like, so that the pH of the product is from weakly acidic to weakly alkaline, i.e., more than 6.5 and 9 or less.

For example, when the ingredient is a raw starch and the alkaline agent is trisodium phosphate, the amount of the alkaline agent added is usually 0.01 to 10% by mass, preferably 0.02 to 5% by mass, and more preferably 0.03 to 2% by mass, based on the total amount of the ingredient flour (a starch and/or a grain flour substantially free from gluten).

The alkaline agent is preferably dissolved in water for kneading to prepare an aqueous solution and mixed with the ingredient flour and the like.

### Alginic Acid Ester

The ingredient of the noodles contains an alginic acid ester. The inclusion of an alginic acid ester in the ingredient can give noodles that are satisfactory in the ease of loosening when eaten and exhibit a good texture.

In the present disclosure, the use of an alginic acid ester, rather than alginic acid or an alginic acid salt, eliminates the need for acid solution treatment. Furthermore, when the noodles are starch noodles, it is possible to produce starch noodles that exhibit a texture such as elasticity and firmness, like that of conventional starch noodles, and are excellent in the ease of loosening, without performing a conventional aging step (a chilling step, a freezing and thawing step, or the like). As used herein, the term "ease of loosening" refers to the ease with which the noodles loosen when lifted with chopsticks during eating.

The alginic acid ester is a compound in which an alcohol is ester-linked to alginic acid.

In general, alginic acid or alginic acid salts are polysaccharides contained in brown algae such as kelp and *wakame* seaweed.

Alginic acid salts and its parent acid, alginic acid, are polymers of uronic acid.

Uronic acid exists in two forms, β-D-mannuronic acid and α-L-guluronic acid.

The sequence of these two constituent sugars in the polymer is not constant, and varies depending on the type and site of seaweed, and the growth degree of the collected seaweed.

The sequence exists in three types of units, i.e., a unit in which mannuronic acid and guluronic acid are alternately linked; a unit in which mannuronic acid is linked; and a unit in which guluronic acid is linked.

Therefore, the alginic acid ester is a compound in which an alcohol is ester-linked to carboxyl groups of uronic acid constituting alginic acid.

In the present disclosure, examples of the alginic acid ester include, but are not specifically limited to, esters of alginic acid and alcohols having 1 to 6 carbon atoms. Examples of alcohols having 1 to 6 carbon atoms include monoalcohols such as methanol, ethanol, propanol, isopropyl alcohol, and butanol; diols such as ethylene glycol and propylene glycol; and triols such as glycerin.

Specific examples of the alginic acid ester include propylene glycol alginate esters, ethylene glycol alginate esters, and glycerin alginate esters. Of these, the alginic acid ester is preferably a propylene glycol alginate ester, which is designated as a food additive.

The propylene glycol alginate ester is a compound in which propylene glycol is ester-linked to carboxyl groups of uronic acid constituting alginic acid. In the propylene glycol alginate ester, not all of carboxyl groups may be esterified, and an unreacted free acid portion or a salt portion such as a sodium or calcium salt may remain.

The alginic acid ester is a white to pale yellowish white powder, has good solubility in cold or warm water, and forms a viscous colloidal solution. The alginic acid ester is a relatively stable material, which undergoes less change with time than other alginic acids (such as alginic acid and alginic acid salts). When stored as a powder in a cool and dark place (about 20°C or less), the alginic acid ester does not tend to alter in quality (such as viscosity and degree of esterification) for a year or longer.

The degree of esterification of the alginic acid ester is usually 40% or more, preferably 70% or more, more preferably 75% or more, and particularly preferably in the range of 75 to 80%. A degree of esterification of 40% or more in the alginic acid ester can meet the standard of the Japan's Specifications and Standards for Food Additives.

A commercially available product can be suitably used as the alginic acid ester.

Examples of commercially available alginic acid esters include propylene glycol alginate esters and formulations thereof: "KONBUSAN 501" (degree of esterification: 75% or more, viscosity at 20°C of a 1% by mass aqueous solution: 150 to 250 mPa•s, manufactured by KIMICA Corporation); "KONBUSAN 503" (degree of esterification: 75% or more, viscosity at 20°C of a 1% by weight aqueous solution: 10 to 30 mPa•s, manufactured by KIMICA Corporation); "KONBUSAN 507" (degree of esterification: 75% or more, viscosity at 20°C of a 1% by mass aqueous solution: 10 to 30 mPa•s, manufactured by KIMICA Corporation); "KIMILOID HV" (degree of esterification: 75% or more, viscosity at 20°C of a 1% by mass aqueous solution: 150 to 250 mPa•s, manufactured by KIMICA Corporation); and "KIMILOID LV" (degree of esterification: 75% or more, viscosity at 20°C of a 1% by mass aqueous solution: 60 to 100 mPa•s, manufactured by KIMICA Corporation).

When mixed with other ingredients, the alginic acid ester may be added in the form of a powder or may be added after being previously prepared in the form of an aqueous solution. Alternatively, the alginic acid ester may be added to water for kneading and mixed as the water for kneading. When the alginic acid ester is used by adding to water for kneading, it is preferred to mix such water for kneading with a powder immediately after preparation. Alternatively, an aqueous solution containing the alginic acid ester and an aqueous solution containing the alkaline agent may be separately added to the ingredient flour. Any of these forms can be selected as appropriate. The alginic acid ester is preferably added to a powder.

Since the alginic acid ester has the function of binding the dough, it also has a function similar to that of the below-described thickening agent.

The amount of the alginic acid ester added can be appropriately determined in consideration of its relationship with other ingredients, for example, the amount of the alkaline agent added, the pH of the noodle dough, the degree of gelatinization treatment, and the noodle quality to be achieved.

The amount of the alginic acid ester added is usually 0.01 to 3% by mass, preferably 0.1 to 2% by mass, and more preferably 0.3 to 1% by mass, based on the total amount of the ingredient flour (a starch and/or a grain flour substantially free from gluten).

### Thickening Agent

The ingredient of the noodles may contain a thickening agent, as required. The addition of a thickening agent facilitates binding the dough during mixing of the ingredient with water for kneading. As used herein, the thickening agent is a thickening agent other than alginic acid esters and does not include alginic acid esters.

When a starch is used as the ingredient flour, the use of a thickening agent allows formation of a noodle dough that does not undergo the dilatancy phenomenon (a phenomenon in which the noodle dough becomes like a solid when strongly held, and becomes like a liquid when released), so that the noodle dough can be formed into noodle strips by extrusion with an extruder.

The thickening agent may be any of those commonly used for foods without specific limitation. Examples of the thickening agent include guar gum, carrageenan gum, xanthan gum, ghatti gum, gum arabic, and pregelatinized starches. As used herein, the term "pregelatinized starch" refers to a starch obtained by heating a starch with water to gelatinize the starch, and then rapidly drying the gelatinized starch into a powder.

These thickening agents may be used alone or in appropriate combinations of two or more.

When a thickening agent is added, the amount of the thickening agent added varies according to the type (viscosity) of the thickening agent, the amount of the alginic acid ester, and the like. For example, the amount of the thickening agent is usually 0.1 to 10% by mass, preferably 0.5 to 8% by mass, and more preferably 1 to 5% by mass, based on the total amount of the ingredient flour (a starch and/or a grain flour substantially free from gluten).

When the thickening agent is a pregelatinized starch, the pregelatinized starch may be separately added. Alternatively, a portion of an ingredient starch may be previously gelatinized by heating while mixing with water to prepare a carrier paste, and the carrier paste may be added as a thickening agent to the remaining portion of the starch to prepare a dough. In this case, there is no need to separately add a thickening agent.

Furthermore, additives commonly used in the production of instant noodles may be added, as required, to the above-mentioned raw materials. Additives include, for example, seasonings, such as salt, amino acids (for example, glutamic acid and inosinic acid), soy sauce (for example, light soy sauce or dark soy sauce), acetic acid, and chicken extract; fats and oils, such as animal and vegetable fats and oils, liquid fats and oils, emulsified fats and oils, and powdered fats and oils; protein materials, such as eggs, milk, dairy products, processed milk products, milk protein, soybean protein, egg yolk powder, egg white powder, whole egg powder, and skim milk powder; and other additives, such as noodle quality improvers, loosening agents, emulsifiers, solubilizers, surfactants, thickeners, excipients, supplements, chelating agents, neutralizing agents, acidulants, dietary fibers, spices, sweeteners, seasonings, vitamins, minerals, dextrin, alcohols, enzyme preparations, preservatives, antiseptics, pigments such as carotenoid pigments, and flavors.

These additives are used by mixing with water. These additives may be added by a method in which they are added in a solid state together with the ingredient flour or the like, or a method in which they are dissolved or suspended in water and added as an aqueous solution or suspension.

In the ingredient mixing step, water is added to the above-mentioned raw materials, and then the various raw materials are kneaded to give a homogenous mixture, using a noodle production mixer, such as a pin mixer, to produce a noodle dough.

The temperature in the ingredient mixing step is not specifically limited and is, for example, usually 18 to 100°C. The temperature may vary greatly depending on the type, amount, and the like of the ingredient.

The time in the ingredient mixing step is not specifically limited and, for example, is usually 2 to 20 minutes, preferably 5 to 15 minutes, and more preferably 10 to 12 minutes.

The amount of the water used in the ingredient mixing step may be any amount required to form the noodle dough.

The amount of the water can be expressed, for example, as the percentage of added water in the noodle dough. As used herein, the percentage of added water refers to the proportion of the moisture content to the mass of the ingredients (excluding those ingredients that are added by being dissolved in water). For example, the alkaline agent, salt, and the like are added by being dissolved in water, and thus are excluded from the ingredients in calculating the percentage of added water.

The percentage of added water is not specifically limited and may, for example, be, 50 to 200% by mass, preferably 60 to 150% by mass, and more preferably 70 to 120% by mass (for example, 70 to 120% by mass, 75 to 120% by mass, 80 to 120% by mass, 85 to 120% by mass, 90 to 120% by mass, 95 to 120% by mass, 100 to 120% by mass, 105 to 120% by mass, 110 to 120% by mass, 115 to 120 wt% by mass; 70 to 115% by mass, 75 to 115% by mass, 80 to 115% by mass, 85 to 115% by mass, 90 to 115% by mass, 95 to 115% by mass, 100 to 115% by mass, 105 to 115% by mass, 110 to 115% by mass; 70 to 110% by mass, 75 to 110% by mass, 80 to 110% by mass, 85 to 110% by mass, 90 to 110% by mass, 95 to 110% by mass, 100 to 110% by mass, 105 to 110% by mass; 70 to 105% by mass, 75 to 105% by mass, 80 to 105% by mass, 85 to 105% by mass, 90 to 105% by mass, 95 to 105% by mass, 100 to 105% by mass; 70 to 100% by mass, 75 to 100% by mass, 80 to 100% by mass, 85 to 100% by mass, 90 to 100% by mass, 95 to 100% by mass; 70 to 95% by mass, 75 to 95% by mass, 80 to 95% by mass, 85 to 95% by mass, 90 to 95% by mass; 70 to 90% by mass, 75 to 90% by mass, 80 to 90% by mass, 85 to 90% by mass; 70 to 85% by mass; 75 to 85% by mass, 80 to 85% by mass; 70 to 80% by mass, 75 to 80% by mass; and 70 to 75% by mass). In general, the lower the percentage of added water, the better the production suitability of the noodles, and the easier it is to make noodles with elasticity and firmness. However, by using the method of the present disclosure, it is possible to produce noodles that are satisfactory in the ease of loosening when eaten and exhibit a good texture with elasticity and firmness, from a noodle dough with a high percentage (70% by mass or more) of added water.

The noodle dough after the mixing step preferably has a pH of 6 to 9.5.

The pH of the noodle dough is measured by directly inserting a pH-measuring device (pH/°C meter for dairy products and semi-solid foods/HI 99161D, manufactured by Hanna Instruments, Inc.) into the noodle dough immediately after the completion of kneading.

According to the method for producing noodles of the present disclosure, even a dough containing a high proportion of added water can impart elasticity and firmness to the noodles.

### Noodle Production Step

The noodle production step is the step of forming the noodle dough obtained in the ingredient mixing step into noodle strips (also referred to as a noodle strip formation step). Examples of methods of forming noodle strips include, but are not specifically limited to, a method in which the noodle dough is extruded through an extruder or the like to form noodle strips; a method in which the noodle dough is rolled into a dough sheet and then cut into noodles strips; and when the ingredient flour is a starch, a method in which a container with multiple holes like *tonpyo*, for example, is used to drop the dough down through the container to form noodle strips (dropping method).

### Gelatinization Step

In the gelatinization step, the starch contained in the noodle strips is gelatinized. Examples of methods of gelatinizing the noodle strips include, but are not specifically limited to, a steaming treatment method using steam (steaming); and a boiling method.

The steaming treatment is preferably performed using a steamer utilizing steam. The steam used in the steaming treatment may be, for example, dry steam, moist steam, or superheated steam. Moist steam is preferably used to improve the texture of the resulting noodle strips. Alternatively, steam generated in a boiler may be depressurized and jetted into a steamer, and the noodle strips may be passed through the steamer to undergo gelatinization.

The gelatinization may also be performed by boiling treatment.

The temperature in the gelatinization step is not specifically limited and, for example, is usually 96 to 110°C, preferably 98 to 105°C, and more preferably 99 to 100°C.

The time of the gelatinization step varies depending on the gelatinization method, the raw material, the method of gelatinizing the noodle strips, and the like.

For example, when the gelatinization step is performed by steaming treatment, the time is usually 1 second to 3 minutes, preferably 5 seconds to 2 minutes, and more preferably 10 seconds to 1.5 minutes.

When the gelatinization step is performed by boiling treatment, the time is usually 1 second to 2 minutes, preferably 5 seconds to 1.5 minutes, and more preferably 10 seconds to 1 minute.

After the gelatinization step, instead of immediately drying the gelatinized noodle strips, a loosening agent (loosening liquid) can be applied to the noodle strips. Addition of the loosening agent is effective in, for example, preventing the noodle strips from adhering to each other. The loosening agent may be water or a liquid seasoning. Alternatively, the loosening agent may be a liquid prepared by dissolving an emulsifier, a fat or oil, an emulsified fat or oil, a polysaccharide thickener, a modified starch, an enzyme, and the like in water, or a liquid prepared by adding an emulsifier, a fat or oil, a polysaccharide thickener, and the like in the liquid seasoning, for example. The loosening agent can be applied, for example, by directly applying the loosening agent to the noodle strips after the gelatinization step, or by immersing the noodle strips after the gelatinization step in the loosening agent.

Other than being applied to the noodle strips after the gelatinization step, the loosening agent can be applied to the noodle strips before or during the gelatinization step, or can be applied by kneading into the noodle dough.

After the application of the loosening agent to the noodle strips, it is preferred to provide a time for allowing the noodle strips to stand at room temperature. By allowing the noodle strips to stand, the water adhering to the noodle strip surface can be absorbed into the noodle strips. The time for allowing the noodle strips to stand is not specifically limited and is usually about 10 seconds to 15 minutes, preferably about 1 to 10 minutes, and more preferably about 2 to 6 minutes.

The method of the present disclosure may include an optional step in addition to the above-mentioned steps. Examples of the optional step include the step of cutting cooled noodle strips (noodle strip cutting step); the step of putting the cut noodle strips in a mold; the step of drying the noodle strips; the step of placing the dried noodles in a cup; the step of adding a seasoning; and the step of packaging.

### Drying Step

The drying step is not specifically limited and, for example, is to cut the resulting noodle strips into about 15 cm, and drying the cut noodle strips.

The drying step is not specifically limited as long as it is a method of reducing the water content in the noodles. Examples of drying methods include hot-air drying, microwave drying, freeze drying, cold-air drying, and frying. In the present disclosure, the noodles are preferably non-fried noodles, and hot-air drying is preferred among the above-mentioned drying methods.

When hot-air drying is performed with a dryer or the like, the temperature of the dryer is not specifically limited and may, for example, be usually about 20 to 180°C, preferably about 40 to 120°C, and more preferably about 50 to 100°C. Since the drying time varies depending on the noodle quality, it is preferred to completely dry the noodles while observing the state of the noodles every 10 minutes, for example.

The dried noodles are transferred to a packaging step, in which they are packaged in a cup with a soup, toppings, and the like, to be sold as an instant noodle product.

### Noodles

The pH of a suspension of the noodles after drying in the present disclosure is usually more than 6.5 and 9 or less, preferably 6.6 to 7.98, and more preferably 6.7 to 7.6.

The pH of the noodles can be measured, for example, by preparing a suspension containing 10% of the solids content of the noodle strips (10% suspension), and measuring the pH of the suspension.

As used herein, the term "solids content" refers to the content of the residue resulting from evaporation and removal of moisture from a moisture-rich food, in food analysis or quality evaluation. The solids content (%) can be determined by 100 - moisture content (%). The moisture content can be measured by, for example, the halogen moisture analyzer MB45 manufactured by OHAUS.

The method of measuring the pH of the noodles after drying (dried noodles) will be specifically described below.
(1) The moisture content of the noodles after drying is measured, and the solids content of the noodle strips is calculated.
(2) The noodle strips are weighed to give a solids content of 6 g, and the weighed noodle strips are placed into a measuring cylinder. For example, in the case of dried noodles with a solids content of 93%, about 6.5 g of the noodles are weighed.
(3) Distilled water at room temperature is added into the measuring cylinder containing the noodle strips until it reaches 60 mL, and the measuring cylinder is allowed to stand at room temperature for 30 minutes to allow the noodles to swell.
(4) The mixture of the noodle strips and distilled water is pulverized in a mixer for 30 seconds to form a 10% suspension, and the suspension is poured into a 100 mL beaker.
(5) The pH is measured at room temperature (25 to 30°C) using a pH-measuring device (pH/°C meter for dairy products and semi-solid foods/HI 99161D, manufactured by Hanna Instruments, Inc.).

The noodles obtained by the method described above are satisfactory in the ease of loosening when eaten and exhibit a good texture with elasticity and firmness.

### Gelatinized Noodles

Noodles after the gelatinization step and before the drying step in the above-described method are referred to as gelatinized noodles. The gelatinized noodles have a good texture with elasticity and firmness. Therefore, the gelatinized noodles before the drying step can also be sold as chilled noodles.

The gelatinized noodles before the drying step can be defined as a precursor for producing the noodles of the present disclosure, and can be produced by the following method.

Thus, the present disclosure includes a method for producing gelatinized noodles, comprising an ingredient mixing step, a noodle production step, and a gelatinization step, wherein the ingredient in the ingredient mixing step comprises an ingredient flour containing a starch and/or a grain flour substantially free from gluten, an alkaline agent, and an alginic acid ester, and wherein a pH of a suspension of gelatinized noodles obtained in the gelatinization step is more than 6.5 and 9 or less; and gelatinized noodles obtained by the method for producing gelatinized noodles.

The pH of the gelatinized noodles can be measured after gelatinization, as in the method of measuring the pH of the dried noodles.

The method of measuring the pH of the gelatinized noodles is specifically as follows.
(1) The moisture content of the noodles after gelatinization is measured, and the solids content of the noodle strips is calculated.
(2) The noodle strips are weighed to give a solids content of 6 g, and the weighed noodle strips are placed into a measuring cylinder. For example, in the case of gelatinized noodles with a solids content of 40%, about 15 g of the gelatinized noodles are weighed.
(3) Distilled water at room temperature is added into the measuring cylinder containing the noodle strips until it reaches 60 mL.
(4) The mixture of the noodle strips and distilled water is pulverized in a mixer for 30 seconds to form a 10% suspension, and the suspension is poured into a 100 mL beaker.
(5) The pH is measured at room temperature (25 to 30°C) using a pH-measuring device (pH/°C meter for dairy products and semi-solid foods/HI 99161D, manufactured by Hanna Instruments, Inc.).

### Examples

The present disclosure will be hereinafter described in more detail with examples; however, the technical scope of the present disclosure is not limited to these examples.

As used herein, the term "about" refers to ± (plus minus) 3 g for the mass of noodles, and refers to ± 3°C for temperature.

### (1) Production of Noodles Containing Starch as Ingredient (Starch Noodles)

In Examples 1 to 13 and Comparative Examples 1 to 23 below, glass noodles were produced as an example of starch noodles.

### Example 1

### (Ingredient Mixing Step)

3000 g of a starch (tapioca starch: "MKK-100" (trade name) manufactured by Matsutani Chemical Industry Co., Ltd.), 30 g of an alginic acid ester ("KONBUSAN 501" (trade name) manufactured by KIMICA Corporation), and 30 g of a thickening agent (guar gum) were introduced into a vacuum mixer and mixed for 3 minutes for premixing.

Separately, 1.2 g of an alkaline agent (trisodium phosphate) was dissolved in 2600 g of water to prepare water for kneading.

Then, the water for kneading was added to the powder mixture, and the mixture was kneaded in a vacuum mixer for 10 minutes.

### Measurement of Percentage of Added Water and pH

The percentage of added water in the resulting kneaded mixture (noodle dough) was calculated using the following equation: [Expression 1] $\frac{Water of Mass}{\begin{matrix}Total Mass of Starch + Alginic Acid Ester \\ + Thickening Agent\end{matrix}} \times 100$

As a result, the percentage of added water in the kneaded mixture (noodle dough) described in Example 1 was 85%.

Additionally, the pH of the noodle dough was measured by directly inserting a pH-measuring device (pH/°C meter for dairy products and semi-solid foods/HI 99161D, manufactured by Hanna Instruments, Inc.) into the noodle dough. As a result, the pH was 6.15.

### (Noodle Production Step)

The resulting noodle dough was conveyed through a Mohno pump (manufactured by Heishin Ltd.) to a pipe and extruded into noodle strips through a nozzle with fine holes.

### (Gelatinization Step)

The resulting noodle strips were passed through a steamer for 1 minute and 20 seconds, in which steam generated in a boiler was depressurized and then jetted, so that the noodle strips were steamed at 100°C under atmospheric pressure to be gelatinized, thus obtaining gelatinized noodles.

### pH Measurement

The pH of the gelatinized noodles was measured by the following method.
(1) The moisture content of the noodles after gelatinization was measured using the halogen moisture analyzer MB45 manufactured by OHAUS, and the solids content of the noodle strips was calculated. As a result, the solids content was 40%.
(2) About 15 g of the noodle strips were weighed to give a solids content of 6 g, and the weighed noodle strips were placed into a measuring cylinder.
(3) Distilled water at room temperature was added into the measuring cylinder containing the noodle strips until it reached 60 mL.
(4) The mixture of the noodle strips and distilled water was pulverized in a mixer for 30 seconds to form a 10% suspension, and the suspension was poured into a 100 mL beaker.
(5) The pH was measured at room temperature (25 to 30°C) using a pH-measuring device (pH/°C meter for dairy products and semi-solid foods/HI 99161D, manufactured by Hanna Instruments, Inc.). As a result, the pH was 6.28.

### (Drying Step)

Then, the noodle strips of the gelatinized noodles were cut into a length of about 15 cm, and allowed to stand at room temperature for 12 minutes.

Next, 5 ml of a loosening liquid was applied to 60 g of the noodle strips, and one serving of the noodle strips at a time were added into a truncated cone-shaped drying frame, and hot-air dried at 50 to 60°C with a dryer, thus obtaining starch noodles (about 20 g per serving).

### Examples 2 to 5 and Comparative Examples 1 to 5

Starch noodles were produced as in Example 1, except that the amount of the alkaline agent added and the amount of water added were changed as shown in Table 2 below.

In Examples 3 and 5, the pH was measured after gelatinization, and the pH of the gelatinized noodles is shown in Table 2 below. In Examples 2 and 4, the pH was not measured after the gelatinization; however, from the results of Examples 1, 3 and 5, the pH is expected to be about the same as the pH of the dried noodles.

### Comparative Examples 6, 8 and 10

Starch noodles were produced as in Example 1, except that the alginic acid ester was changed to alginic acid, and that the amount of the alkaline agent added and the amount of water added were changed as shown in Table 2 below.

### Comparative Examples 7, 9 and 11

Starch noodles were produced as in Comparative Examples 6, 8, and 10, respectively, except that, after the gelatinization step, calcium treatment (treatment in which the noodle strips after gelatinization were immersed in a 1% calcium lactate solution for 10 seconds) was performed to gel the ionized alginic acid.

### Comparative Examples 12, 14 and 16

Starch noodles were produced as in Example 1, except that the alginic acid ester was changed to sodium alginate, and that the amount of the alkaline agent added and the amount of water added were changed as shown in Table 2 below.

### Comparative Examples 13, 15 and 17

Starch noodles were produced as in Comparative Examples 12, 14 and 16, respectively, except that, after the gelatinization step, the calcium treatment was performed to gel the sodium alginate.

The starch noodles (Examples 1 to 5 and Comparative Examples 1 to 17) produced were subjected to the following tests.

### pH Measurement

The pH of the starch noodles obtained was measured by the following method.
(1) The moisture content of the noodles after drying was measured using the halogen moisture analyzer MB45 manufactured by OHAUS, and the solids content of the noodle strips was calculated. The dried noodles obtained in Examples 1 to 5 had a solids content of 91 to 94%, and the dried noodles obtained in the other examples and comparative examples were expected to have a similar solids content; thus, the amount of the noodle strips to be weighed was determined to be about 6.5 g.
(2) About 6.5 g of the noodle strips of the starch noodles were weighed, and the weighed noodle strips were placed into a measuring cylinder.
(3) Distilled water at room temperature was added into the measuring cylinder containing the noodle strips until it reached 60 mL, and the measuring cylinder was allowed to stand at room temperature for 30 minutes to allow the noodles to swell.
(4) The mixture of the noodle strips and distilled water was pulverized in a mixer for 30 seconds to form a 10% suspension, and the suspension was poured into a 100 mL beaker.
(5) The pH was measured at room temperature (25 to 30°C) using a pH-measuring device (pH/°C meter for dairy products and semi-solid foods/HI 99161D, manufactured by Hanna Instruments, Inc.).

### Sensory Test

The starch noodles produced were allowed to stand at room temperature for 1 day or longer. Then, the starch noodles were placed in a container, hot water was poured into the container, and the noodles were allowed to stand for about 3 minutes. Then, a sensory test for texture and ease of loosening was performed.

The sensory test was performed twice by five trained panelists (the number of evaluations: 10).

The texture was evaluated on a 1 to 5 scale according to the evaluation criteria shown in Table 1 below, and the average of the 10 values was calculated. An average score of 2.5 or more was determined to be acceptable. The score of 5 for texture means that the texture is similar to the texture of commercially available Chinese glass noodles (glass noodles produced through the freezing and thawing step).

With respect to the ease of loosening (ease of loosening when eaten), an operation in which chopsticks were inserted into the center of a noodle lump, and the noodle lump or noodle strips were lifted until they emerged from the surface of the hot water was repeated until the noodle strips loosened, and the ease of loosening was evaluated by the number of times of lifting and the state of the noodle lump. The ease of loosening was also evaluated on a 1 to 5 scale according to the evaluation criteria shown in Table 1 below, and an average score of 2.5 or more of the 10 values was determined to be acceptable.

"Not Dischargeable" indicates that the noodle dough could not be discharged from the nozzle in the noodle production step, and noodles were not obtained. "Drying failure" indicates that the noodle strips after gelatinization were not dried even after dried for 1 hour.

**[Table 1]**

| Table 1 | Score | Evaluation |
|---|---|---|
| Evaluation Item | | |
| Texture | 5 | Glass noodles-like texture with high elasticity and firmness |
| | 4 | Texture acceptable as glass noodles, with rather high elasticity and firmness |
| | 3 | Texture acceptable as glass noodles, although with rather low elasticity and firmness |
| | 2 | Rather poor texture with low elasticity and firmness |
| | 1 | Extremely poor texture with very low elasticity and firmness |
| Ease of Loosening | 5 | Loosened immediately |
| | 4 | Loosened after inserting chopsticks only once or twice |
| | 3 | Loosened after inserting chopsticks about five times |
| | 2 | Loosened at last after inserting chopsticks about ten times |
| | 1 | Did not sufficiently loosen even after inserting chopsticks ten times or more |

**[Table 2]**

| Table 2 | Alginic Acid Amount Added | Amount of Alkaline Agent Added | Amount of Water Added | Percentage of Added Water | pH of Noodle Dough | pH of Gelatinized Noodles | pH of Product | Calcium Treatment | Evaluation of Texture | Evaluation of Ease of Loosening |
|---|---|---|---|---|---|---|---|---|---|---|
| Comp. Ex. 1 | Alginic Acid Ester 30 g | 0 g | 2600 g | 85% | 4.21 | - | - | No | Drying Failure | |
| Comp. Ex. 2 | | 1 g | 2600 g | 85% | 5.95 | - | - | No | Drying Failure | |
| Ex. 1 | | 1.2 g | 2600 g | 85% | 6.15 | 6.28 | 6.22 | No | 2.5 | 3.5 |
| Ex. 2 | | 2 g | 2650 g | 87% | 7.30 | - | 6.70 | No | 3.9 | 4.8 |
| Ex. 3 | | 5 g | 3300 g | 108% | 8.76 | 7.41 | 7.31 | No | 5.0 | 4.9 |
| Ex. 4 | | 8 g | 3400 g | 111% | 9.15 | - | 7.57 | No | 3.8 | 4.2 |
| Ex. 5 | | 10 g | 3500 g | 114% | 9.36 | 7.97 | 7.97 | No | 2.6 | 3.7 |
| Comp. Ex. 3 | | 15 g | 3500 g | 114% | 9.77 | - | - | No | Drying Failure | |
| Comp. Ex. 4 | | 20 g | 3500 g | 114% | 10.12 | - | - | No | Not Dischargeable | |
| Comp. Ex. 5 | | 50 g | 2500 g | 82% | 10.85 | - | - | No | Not Dischargeable | |
| Comp. Ex. 6 | Alginic Acid 30 g | 12 g | 2700 g | 88% | 5.45 | - | - | No | Drying Failure | |
| Comp. Ex. 7 | | | 2700 g | 88% | | | | Yes | Drying Failure | |
| Comp. Ex. 8 | | 18 g | 2700 g | 88% | 7.06 | - | - | No | Drying Failure | |
| Comp. Ex. 9 | | | 2700 g | 88% | | | | Yes | Drying Failure | |
| Comp. Ex. 10 | | 22 g | 2700 g | 88% | 7.52 | - | - | No | Drying Failure | |
| Comp. Ex. 11 | | | 2700 g | 88% | | | | Yes | Drying Failure | |
| Comp. Ex. 12 | Sodium Alginate 30 g | 1 g | 2700 g | 88% | 7.6 | - | - | No | Drying Failure | |
| Comp. Ex. 13 | | | 2700 g | 88% | | - | 8.16 | Yes | 1.6 | 1.5 |
| Comp. Ex. 14 | | 3 g | 2700 g | 88% | 8.46 | - | - | No | Drying Failure | |
| Comp. Ex. 15 | | | 2700 g | 88% | | - | 8.35 | Yes | 1.6 | 1.5 |
| Comp. Ex. 16 | | 5 g | 2700 g | 88% | 9.32 | - | - | No | Drying Failure | |
| Comp. Ex. 17 | | | 2700 g | 88% | | - | 8.64 | Yes | 1.6 | 1.3 |

### Results

As can be seen from Table 2, the starch noodles of Examples 1 to 5 were evaluated as acceptable in both the evaluation of texture and the evaluation of ease of loosening when eaten. With respect to the starch noodles of Examples 1 to 5, the pH at the stage of the noodle strips after gelatinization (gelatinized noodles) was more than 6.5 and 9 or less, and thus, the noodles were elastic and firm, and the noodle strips were less sticky. Therefore, there was almost no adhesion between the noodle strips in the state before drying, and the ease of loosening was satisfactory.

On the other hand, in Comparative Examples 1, 2 and 3, the pH of the noodle dough after the mixing step was less than 6 or more than 9.5, and thus, a drying failure occurred, and noodles as a product were not obtained. With respect to the starch noodles of Comparative Examples 1, 2 and 3, the noodle strips were weaker in strength and more easily broke into shorter pieces than the noodle strips of Examples 1 to 5, at the stage of the noodle strips after gelatinization. Moreover, the noodle strips lacked elasticity and firmness, and had a sticky surface, so that the noodle strips immediately adhered to each other, resulting in a drying failure.

In Comparative Examples 4 and 5, the pH of the noodle dough after the mixing step was more than 10, and thus, the noodle dough could not be discharged from the nozzle in the noodle production step, and noodles as a product were not obtained. This is believed to be because the pH of the noodle dough was too high, which reduced the effect of the alginic acid ester of binding the dough. When an attempt was made to form this noodle dough into noodle strips by the dropping method, noodle strips were obtained. However, the resulting noodle strips were weak and sticky as in Comparative Examples 1, 2 and 3, and were expected to result in a drying failure; thus, drying was not performed.

In Comparative Examples 6, 8 and 10 (using alginic acid) and Comparative Examples 12, 14 and 16 (using sodium alginate) that used alginic acids other than the alginic acid ester, a drying failure occurred, and noodles as a product were not obtained. As in Comparative Examples 1, 2 and 3, these starch noodles lacked elasticity at the stage of the noodle strips after gelatinization (gelatinized noodles), and the noodle strips easily adhered to each other, thus resulting in a drying failure.

The ionized alginic acid and sodium alginate have the property of gelling when calcium ions or the like are added; thus, the noodle strips after the gelatinization step (gelatinized noodles) were subjected to the calcium treatment. However, in Comparative Examples 7, 9 and 11 (using alginic acid), no significant improvement in noodle quality was observed, a drying failure occurred, and noodles as a product were not obtained. In Comparative Examples 13, 15 and 17 (using sodium alginate), the adhesion of the noodle strips was slightly reduced, and the noodle strips were dried. However, the resulting noodles had a score of 1 to 2 for the evaluation of texture and a score of 1 to 3 for the evaluation of ease of loosening, and were clearly poor in texture and ease of loosening.

### Comparative Examples 6 to 11 and Comparative Examples 18 and 19 (Investigation of Method of Adding Alginic Acid)

In Comparative Examples 6 to 11, alginic acid was mixed with the starch and the thickening agent, and then water for kneading was added to the resulting powder mixture and kneaded; thus, there was a possibility that the alginic acid was not sufficiently swollen. Thus, an attempt was made to produce starch noodles by adding alginic acid to water for kneading.

The ingredient mixing step was performed as follows. 3000 g of a starch (tapioca starch: "MKK-100" (trade name) manufactured by Matsutani Chemical Industry Co., Ltd.) and 30 g of a thickening agent (guar gum) were introduced into a vacuum mixer and mixed for 3 minutes for premixing. Separately, 30 g of alginic acid and 22 g of an alkaline agent (trisodium phosphate) were dissolved in 2600 g of water to prepare water for kneading. Then, the water for kneading was added to the powder mixture, and the mixture was kneaded in a vacuum mixer for 10 minutes.

The noodle production step, gelatinization step, and drying step were performed as in Example 1 to produce starch noodles (Comparative Example 18).

Moreover, an attempt was made to produce starch noodles as in Comparative Example 18, except that acid solution treatment (step of immersing the noodle strips in 8.3 g/L of a 90% lactic acid solution for 30 seconds) was performed after the gelatinization step (Comparative Example 19).

When starch noodles could be produced, the sensory evaluation of the starch noodles was performed. The effect of the method of adding alginic acid was investigated by comparing these results with the results of Comparative Example 10. The results are shown in Table 3. The results of Comparative Example 10 are those reproduced from Table 2.

**[Table 3]**

| Table 3 | Alginic Acid Amount Added | Method of Adding Alginic Acid | Amount of Alkaline Agent Added | Amount of Water Added | Percentage of Added Water | pH of Noodle Dough | pH of Product | Acid Solution Treatment | Evaluation of Texture | Evaluation of Ease of Loosening |
|---|---|---|---|---|---|---|---|---|---|---|
| Comp. Ex. 10 | Alginic Acid 30 g | Powder Mixture | | 2700 g | 88% | 7.52 | - | No | Drying Failure | |
| Comp. Ex. 18 | | Water for Kneading | 22 g | 2700 g | 88% | 7.36 | - | No | Drying Failure | |
| Comp. Ex. 19 | | Water for Kneading | | 2700 g | 88% | 7.36 | - | Yes | Drying Failure | |

### Results

As can be seen from Table 3, in Comparative Example 18, the alginic acid, together with the alkaline agent, was mixed with the water for kneading to allow the alginic acid to sufficiently swell; however, no significant improvement in noodle quality was observed. In Comparative Example 19, the alginic acid, together with the alkaline agent, was mixed with the water for kneading, and then the acid solution treatment was performed after the gelatinization step; however, the noodle quality was evaluated as a drying failure as in Comparative Examples 10 and 18, and noodles as a product were not obtained.

### Examples 2 and 3 and Comparative Examples 20 to 23 (Investigation with or without Alginic Acid Ester)

An attempt was made to produce starch noodles as in Example 1, except that the alginic acid ester and the alkaline agent were not added (Comparative Example 20).

Moreover, an attempt was made to produce starch noodles as in Example 2, except that the alginic acid ester was not added (Comparative Example 21). An attempt was made to produce starch noodles as in Example 3, except that the alginic acid ester was not added (Comparative Example 22).

Furthermore, an attempt was made to produce starch noodles as in Example 3, except that the alginic acid ester was not added and that the amount of the thickening agent was changed to the amount shown in Table 3 (Comparative Example 23).

When starch noodles could be produced, the sensory evaluation of the starch noodles was performed. The effect of adding the alginic acid ester was investigated by comparing these results with the results of Examples 2 and 3. The results are shown in Table 4. The results of Examples 2 and 3 are those reproduced from Table 2.

**[Table 4]**

| Table 4 | with or without Addition of Alginic Acid Ester | Amount of Alkaline Agent Added | Amount of Thickening Agent Added | Amount of Water Added | Percentage of Added Water | pH of Noodle Dough | pH of Product | Evaluation of Texture | Evaluation of Ease of Loosening |
|---|---|---|---|---|---|---|---|---|---|
| Comp. Ex. 20 | No | 0 g | 30 g | 2600 g | 86% | 6.81 | - | Not Dischargeable | |
| Ex. 2 | Yes | 2 g | 30 g | 2650 g | 87% | 7.30 | 6.70 | 3.9 | 4.8 |
| Comp. Ex. 21 | No | 2 g | 30 g | 2650 g | 87% | 8.52 | - | Not Dischargeable | |
| Ex. 3 | Yes | 5 g | 30 g | 3300 g | 108% | 8.76 | 7.31 | 5 | 4.9 |
| Comp. Ex. 22 | No | 5 g | 30 g | 3300 g | 109% | 9.30 | - | Not Dischargeable | |
| Comp. Ex. 23 | No | 5 g | 90 g | 3300 g | 107% | 9.03 | - | Drying Failure | |

### Results

As can be seen from Table 4, the starch noodles of Examples 2 and 3 to which the alginic acid ester was added were evaluated as acceptable in both the evaluation of texture and the evaluation of ease of loosening.

In contrast, in all of Comparative Examples 20, 21, and 22 without the addition of the alginic acid ester, the starch noodles could not be discharged from the nozzle in the noodle production step, and starch noodles as a product were not obtained. In these cases, the dough was believed to be poorly bound as in Comparative Examples 4 and 5; thus, the amount of the thickening agent added was increased to three times that in Comparative Example 22 in order to make the dough dischargeable, and noodles were produced (Comparative Example 23). In Comparative Example 23, the noodles could be discharged from the nozzle in the noodle production step; however, a drying failure occurred in the drying step, and noodles as a product were not obtained. The noodle strips after gelatinization (gelatinized noodles) of Comparative Example 23 also had a noodle quality of being weak and sticky, as observed in Comparative Examples 1, 2, 3, 12, 14 and 16.

### Examples 3, 6 and 7 (Investigation of Alkaline Agent)

An attempt was made to produce starch noodles as in Example 3, except that the type of the alkaline agent and the amount added were changed as shown in Table 5 below (Examples 6 and 7). When starch noodles could be produced, the sensory evaluation of the starch noodles was performed. The effect of the type of the alkaline agent was investigated by comparing these results with the results of Example 3. The results are shown in Table 5. The results of Example 3 are those reproduced from Table 2.

**[Table 5]**

| Table 5 | Alkaline Agent Amount Added | Amount of Water Added | Percentage of Added Water | pH of Noodle Dough | pH of Product | Evaluation of Texture | Evaluation of Ease of Loosening |
|---|---|---|---|---|---|---|---|
| Ex. 3 | Trisodium Phosphate 5 g | 3300 g | 108% | 8.76 | 7.31 | 5.0 | 4.9 |
| Ex. 6 | Sodium Tripolyphosphate 10 g | 3300 g | 108% | 7.84 | 6.91 | 3.9 | 4.1 |
| Ex. 7 | Potassium Carbonate 5 g | 3300 g | 108% | 8.72 | 7.3 | 4.1 | 2.8 |

### Results

As can be seen from Table 5, the starch noodles of Examples 6 and 7, in which the type of the alkaline agent was changed, were evaluated as acceptable in both the evaluation of texture and the evaluation of ease of loosening, as in Example 3. Therefore, it was found that starch noodles excellent in texture and ease of loosening can be obtained regardless of the type of the alkaline agent.

### Examples 3, 4 and 8 to 10 (Investigation of Type of Alginic Acid Ester)

An attempt was made to produce starch noodles as in Example 3, except that "KONBUSAN 503" manufactured by KIMICA Corporation was used as the alginic acid ester, and that the amount of the alkaline agent added and the amount of water added were changed (Examples 8 to 10). When starch noodles could be produced, the sensory evaluation of the starch noodles was performed. The effect of the type of the alginic acid ester was investigated by comparing these results with the results of Examples 3 and 4. The results are shown in Table 6. The results of Examples 3 and 4 are those reproduced from Table 2.

**[Table 6]**

| Table 6 | Alginic Acid Ester | Amount of Trisodium Phosphate Added | Amount of Water Added | Percentage of Added Water | pH of Noodle Dough | pH of Product | Evaluation of Texture | Evaluation of Ease of Loosening |
|---|---|---|---|---|---|---|---|---|
| Ex. 3 | KONBUSAN 501 | 5 g | 3300 g | 108% | 8.76 | 7.31 | 5.0 | 4.9 |
| Ex. 4 | KONBUSAN 501 | 8 g | 3400 g | 111% | 9.15 | 7.57 | 3.8 | 4.2 |
| Ex. 8 | KONBUSAN 503 | 0.5 g | 2600 g | 85% | 6.54 | 6.24 | 2.5 | 3.5 |
| Ex. 9 | KONBUSAN 503 | 1 g | 2600 g | 85% | 7.07 | 6.56 | 3.4 | 4.5 |
| Ex. 10 | KONBUSAN 503 | 5 g | 3100 g | 101% | 8.97 | 7.21 | 4.5 | 3.8 |

### Results

As can be seen from Table 6, the starch noodles of Examples 8 to 10 using a product of an alginic acid ester different from that in Examples 3 and 4 were acceptable in the evaluation of texture and the evaluation of ease of loosening, as in Examples 3 and 4. Therefore, it was found that starch noodles excellent in texture and ease of loosening can be obtained regardless of the type of the alginic acid ester.

### Examples 4 and 11 (Investigation of Type of Starch)

An attempt was made to produce starch noodles as in Example 4, except that the starch shown in Table 7 below was used, and that the amount of the starch added and the amount of water added were changed (Example 11). When starch noodles could be produced, the sensory evaluation of the starch noodles was performed. The effect of the type of the starch was investigated by comparing the results with the results of Example 4. The results are shown in Table 7. The results of Example 4 are those reproduced from Table 2.

**[Table 7]**

| Table 7 | Starch | Amount of Water Added | Percentage of Added Water | pH of Noodle Dough | pH of Product | Evaluation of Texture | Evaluation of Ease of Loosening |
|---|---|---|---|---|---|---|---|
| Ex. 4 | Tapioca Starch 3000 g | 3400 g | 111% | 9.15 | 7.57 | 3.8 | 4.2 |
| Ex. 11 | Potato Starch 3000 g | 2800 g | 92% | 8.50 | 7.30 | 5.0 | 5.0 |

### Results

As can be seen from Table 7, the starch noodles of Example 11 using a starch different from that of Example 4 were acceptable in the evaluation of texture and the evaluation of ease of loosening, as in Example 4. Therefore, it was found that starch noodles excellent in texture and ease of loosening can be obtained regardless of the type of the starch.

### Examples 3 and 12 (Investigation of Type of Thickening Agent)

An attempt was made to produce starch noodles as in Example 3, except that the type of the thickening agent and the amount added were changed as shown in Table 8 below (Example 12). When starch noodles could be produced, the sensory evaluation of the starch noodles was performed. The results are shown in Table 8. The results of Example 3 are those reproduced from Table 2.

**[Table 8]**

| Table 8 | Thickening Agent | Amount of Water Added | Percentage of Added Water | pH of Noodle Dough | pH of Product | Evaluation of Texture | Evaluation of Ease of Loosening |
|---|---|---|---|---|---|---|---|
| Ex. 3 | Guar Gum 30 g | 3300 g | 108% | 8.76 | 7.31 | 5.0 | 4.9 |
| Ex. 12 | Pregelatinized Starch 90 g | 3300 g | 106% | 8.83 | 7.30 | 3.4 | 4.2 |

### Results

As can be seen from Table 8, the starch noodles of Example 12 using a thickening agent different from that of Example 3 were acceptable in the evaluation of texture and the evaluation of ease of loosening, as in Example 3. Therefore, it was found that starch noodles excellent in texture and ease of loosening can be obtained regardless of the type of the thickening agent.

### Examples 3 and 13 (Investigation with or without Acid Solution Treatment)

An attempt was made to produce starch noodles as in Example 3, except that acid solution treatment (step of immersing the noodle strips in 8.3 g/L of a 90% lactic acid solution for 30 seconds) was performed after the gelatinization step (Example 13). When starch noodles could be produced, the sensory evaluation of the starch noodles was performed. The results are shown in Table 9. The results of Example 3 are those reproduced from Table 2.

**[Table 9]**

| Table 9 | Amount of Trisodium Phosphate Added | Amount of Water Added | Percentage of Added Water | pH of Noodle Dough | pH of Product | Acid Solution Treatment | Evaluation of Texture | Evaluation of Ease of Loosening |
|---|---|---|---|---|---|---|---|---|
| Ex. 3 | 5 g | 3300 g | 108% | 8.76 | 7.31 | No | 5.0 | 4.9 |
| Ex. 13 | | | | | 3.11 | Yes | 4.2 | 2.9 |

### Results

As can be seen from Table 9, the starch noodles of Example 13 that had been subjected to the acid solution treatment were acceptable in the evaluation of texture and the evaluation of ease of loosening.

Therefore, it was found that according to the method for producing noodles of the present disclosure, it is possible to obtain starch noodles excellent in texture and ease of loosening not only when the acid solution treatment is not performed, but also when the acid solution treatment is performed.

### (2) Noodles Containing Grain Flour Substantially Free From Gluten As Ingredient

Rice noodles and buckwheat noodles (*soba*) were produced as described below as noodles each containing a grain flour substantially free from gluten as an ingredient, and the percentage of added water, the pH of the noodle dough, and the pH of the noodles were measured by the same methods as those for the starch noodles described above.

The resulting noodles were allowed to stand at room temperature for 1 day or longer. Then, the noodles were placed in a container, hot water was poured into the container, and the noodles were allowed to stand for about 3 minutes. Then, a sensory test for texture and ease of loosening was performed.

The sensory test was performed twice by five trained panelists (the number of evaluations: 10).

The texture was evaluated on a 1 to 5 scale according to the evaluation criteria shown in Table 10 below, and the average of the 10 values was calculated. An average score of 3 or more was determined to be acceptable because, a firmer texture than that of the starch noodles described above is favored for noodles containing a grain flour substantially free from gluten as an ingredient, such as rice noodles or buckwheat noodles.

With respect to the ease of loosening (ease of loosening when eaten), an operation in which chopsticks were inserted into the center of a noodle lump, and the noodle lump or noodle strips were lifted until they emerged from the surface of the hot water was repeated until the noodle strips loosened, and the ease of loosening was evaluated by the number of times of lifting and the state of the noodle lump. The ease of loosening was also evaluated on a 1 to 5 scale according to the evaluation criteria shown in Table 10 below, and the average of the 10 values was calculated. An average score of 3 or more was determined to be acceptable because, noodles containing a grain flour substantially free from gluten as an ingredient, such as rice noodles or buckwheat noodles, are inherently satisfactory in the ease of loosening, as compared to the starch noodles described above.

**[Table 10]**

| Table 10 | Score | Evaluation |
|---|---|---|
| Evaluation Item | | |
| Texture | 5 | Chewy texture with very high elasticity and firmness |
| | 4 | Texture with rather high elasticity and firmness |
| | 3 | Texture acceptable as a product, although with rather low elasticity and firmness |
| | 2 | Texture with low elasticity and firmness |
| | 1 | Texture with a disintegrating feel, with very low elasticity and firmness |
| Ease of Loosening | 5 | Loosened immediately |
| | 4 | Loosened after inserting chopsticks only once or twice |
| | 3 | Loosened after inserting chopsticks about five times |
| | 2 | Loosened at last after inserting chopsticks about ten times |
| | 1 | Did not sufficiently loosen even after inserting chopsticks ten times or more |

### Example 14, and Comparative Examples 24 and 25 (Rice Noodles)

Rice noodles are noodles made using rice flour as a grain flour substantially free from gluten.

3000 g of rice flour ("soft rice flour V3" (trade name) manufactured by Namisato Corporation), 9 g of an alginic acid ester ("KONBUSAN 501" (trade name) manufactured by KIMICA Corporation), and 90 g of a thickening agent (pregelatinized starch) were introduced into a vacuum mixer and mixed for 3 minutes for premixing.

Separately, 8 g of an alkaline agent (trisodium phosphate) was dissolved in 2900 g of water to prepare water for kneading. After the mixing step, noodles were produced as in Example 1 (Example 14).

An attempt was made to produce noodles as in Example 14, except that the alginic acid ester was not added and that the amount of water was changed to 3300 g (Comparative Example 24).

An attempt was made to produce noodles as in Example 14, except that the alkaline agent was not added and that the amount of water was changed to 3300 g (Comparative Example 25).

When rice noodles could be produced, the sensory evaluation of the rice noodles was performed. The results are shown in Table 11.

**[Table 11]**

| Table 11 | Amount of Alginic Acid Ester Added | Amount of Alkaline Agent Added | Amount of Thickening Agent Added | Amount of Water Added | Percentage of Added Water | pH of Noodle Dough | pH of Product | Evaluation of Texture | Evaluation of Ease of Loosening |
|---|---|---|---|---|---|---|---|---|---|
| Ex. 14 | 9g | 8 g | 90 g | 2900 g | 94% | 8.30 | 8.09 | 4.8 | 4.8 |
| Comp. Ex. 24 | 0 g | 8 g | 90 g | 3300 g | 107% | 8.56 | 8.42 | 1.9 | - |
| Comp. Ex. 25 | 9 g | 0 g | 90 g | 3300 g | 106% | 6.06 | 6.49 | 2.9 | 3.4 |

### Results

As can be seen from Table 11, the rice noodles of Example 14, in which the alginic acid ester was added and the pH was adjusted to be optimal with the alkaline agent, had a good texture with elasticity and firmness.

In contrast, the rice noodles of Comparative Example 24, in which the alginic acid ester was not added, and the rice noodles of Comparative Example 25, in which the pH was not adjusted, had low elasticity and firmness and had a texture with a disintegrating feel. Both of the noodles had poor production suitability because the noodle strips after gelatinization (gelatinized noodles) were fragile and easily broke into shorter pieces. In particular, the rice noodles of Comparative Example 24 were fragile, and most of them became short noodles.

### Example 14-1, Example 14-2 and Comparative Example 24-1 (Rice Noodles)

Next, based on the results of Example 14, and Comparative Examples 24 and 25 above, rice noodles having a percentage of added water of 70% were produced; then, the pH of the gelatinized noodles and the pH of the noodles as a product were measured, and the sensory evaluation was performed.

Specifically, 3000 g of rice flour ("soft rice flour V3" manufactured by Namisato Corporation) and 3 g of an alginic acid ester ("KONBUSAN 501" (trade name) manufactured by KIMICA Corporation) were introduced into a vacuum mixer and mixed for 3 minutes for premixing.

Separately, 1 g of an alkaline agent (trisodium phosphate) was dissolved in 2102 g of water to prepare water for kneading. After the mixing step, rice noodles having a percentage of added water of 70% were produced as in Example 1 (Example 14-1).

Moreover, rice noodles of Example 14-2 and Comparative Example 24-1 were produced as in Example 14-1, except that the amount of the alkaline agent was changed as shown in Table 11-1 below, and the pH measurement and sensory evaluation were performed.

**[Table 11-1]**

| Table 11-1 | Rice Flour | Alginic Acid Ester | Alkaline Agent | Amount of Water Added | Percentage of Added Water | pH of Gelatinized Noodles | pH of Product | Evaluation of Texture | Evaluation of Ease of Loosening |
|---|---|---|---|---|---|---|---|---|---|
| Ex. 14-1 | 3000 g | 3 g | 1 g | 2102 g | 70% | 6.67 | 6.68 | 5.0 | 5.0 |
| Ex. 14-2 | 3000 g | 3 g | 0.2 g | 2102 g | 70% | 6.54 | 6.54 | 5.0 | 5.0 |
| Comp. Ex. 24-1 | 3000 g | 3 g | - | 2102 g | 70% | 6.49 | 6.47 | 2.7 | Not Assessable (for Noodles being Short) |

### Results

From the results of Examples 14-1 and 14-2 in Table 11-1, it was found that the noodles containing an alginic acid ester and an alkaline agent and having a percentage of added water of 70% had a pH of more than 6.5 and 9 or less after drying, were satisfactory in the ease of loosening, and had a good texture.

In contrast, the noodles of Comparative Example 24-1 containing no alkaline agent had a pH of less than 6.5 after drying.

FIG. 1 shows photographs each taken of the state of noodle strips of Example 14-2 or Comparative Example 24-1.

As shown in FIG. 1, the dried noodles of Example 14-2 were held together in a lump, and the noodles after reconstitution with hot water easily loosened and had a good texture with elasticity and firmness.

In contrast, with respect to the dried noodles of Comparative Example 24-1, the noodle strips had a noodle quality of being fragile and easily breaking into shorter pieces. Moreover, the noodles after reconstitution with hot water were so short that they could not be subjected to the evaluation of the ease of loosening. Furthermore, in the evaluation of the texture, the noodles were evaluated as having low elasticity and firmness.

### Examples 15 and 16, and Comparative Example 26 (Buckwheat Noodles)

Buckwheat noodles are noodles made using buckwheat flour as a grain flour substantially free from gluten, but contain a modified starch together with the buckwheat flour as an ingredient flour.

2700 g of buckwheat flour ("Buckwheat Flour Kaoru (i)" (trade name) manufactured by Iisaka Flour Milling Co., Ltd.), 300 g of modified starch (acetylated tapioca starch: "Matsutani Sakura" (trade name) manufactured by Matsutani Chemical Industry Co., Ltd.), 15 g of an alginic acid ester ("KONBUSAN 501" (trade name) manufactured by KIMICA Corporation), and 45 g of a thickening agent (guar gum) were introduced into a vacuum mixer and mixed for 3 minutes for premixing.

Separately, 30 g of an alkaline agent (trisodium phosphate) was dissolved in 2800 g of water to prepare water for kneading. After the mixing step, buckwheat noodles were produced as in Example 1 (Example 15).

An attempt was made to produce buckwheat noodles as in Example 15, except that the amount of the alkaline agent (trisodium phosphate) was changed to 5 g (Example 16).

An attempt was made to produce buckwheat noodles as in Example 15, except that the alkaline agent was not added (Comparative Example 26).

When buckwheat noodles could be produced, the sensory evaluation of the buckwheat noodles was performed. The results are shown in Table 12.

**[Table 12]**

| Table 12 | Amount of Alginic Acid Ester Added | Amount of Alkaline Agent Added | Amount of Thickening Agent Added | Amount of Water Added | Percentage of Added Water | pH of Noodle Dough | pH of Product | Evaluation of Texture | Evaluation of Ease of Loosening |
|---|---|---|---|---|---|---|---|---|---|
| Ex. 15 | 15 g | 30 g | 45 g | 2800 g | 92% | 7.67 | 7.69 | 4.8 | 4.9 |
| Ex. 16 | 15 g | 5 g | 45 g | 2800 g | 92% | 6.37 | 6.80 | 4 | 3.1 |
| Comp. Ex. 26 | 15 g | 0 g | 45 g | 2800 g | 92% | 5.98 | 6.52 | 2.8 | 1.7 |

### Results

As can be seen from Table 12, the buckwheat noodles of Examples 15 and 16, in which the pH was adjusted to be optimal with the alkaline agent, had a good texture with elasticity and firmness. However, the pH of the noodle strips of Example 16 was the lowest level at which the effect was obtained, and the noodle strips after gelatinization (gelatinized noodles) were slightly fragile.

In contrast, the buckwheat noodles of Comparative Example 26, in which the pH was not adjusted, had low elasticity and firmness and had a texture with a disintegrating feel. Moreover, the noodle strips after the gelatinization (gelatinized noodles) were fragile and thus easily broke into shorter pieces, resulting in many noodles with a length shorter than that (15 cm) of the cut noodle strips when eaten.

As described above, by using the present disclosure, the noodle quality or texture can be controlled with the pH of the noodles; thus, the pH may be adjusted appropriately in accordance with the desired texture, production line, and the like.

## Claims

1. A method for producing noodles, comprising an ingredient mixing step, a noodle production step, a gelatinization step, and a drying step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water,
wherein a pH of a suspension of noodles obtained in the drying step is more than 6.5 and 9 or less, and
wherein an acid solution treatment step is not performed or an acid solution treatment step is performed after the gelatinization step.

2. The method for producing noodles according to claim 1, wherein the noodle dough obtained in the ingredient mixing step has a pH of 6 to 9.5.

3. The method for producing noodles according to claim 1, wherein the ingredient mixing step is the step of producing a noodle dough by mixing the ingredient and water, and
wherein a percentage of added water in the noodle dough is 60% by mass or more.

4. The method for producing noodles according to claim 1, wherein the acid solution treatment step is not performed after the gelatinization step.

5. The method for producing noodles according to claim 1, wherein the method does not include an aging step.

6. Noodles obtained by the method for producing noodles according to any one of claims 1 to 5.

7. A method for producing gelatinized noodles, comprising an ingredient mixing step, a noodle production step, and a gelatinization step,
wherein the ingredient in the ingredient mixing step comprises an ingredient flour containing a starch and/or a grain flour substantially free from gluten (provided that the ingredient flour containing a starch and/or a grain flour substantially free from gluten excludes wheat flour), an alkaline agent, and an alginic acid ester,
wherein the ingredient mixing step is the step of producing a noodle dough by mixing the ingredient and water, and
wherein a pH of a suspension of gelatinized noodles obtained in the gelatinization step is more than 6.5 and 9 or less, and an acid solution treatment step is not performed or an acid solution treatment step is performed after the gelatinization step.

8. Gelatinized noodles obtained by the method for producing gelatinized noodles according to claim 7.
